# FASCICULE DE BREVET EUROPEEN

(11) **EP 0 542 907 B1**
(45) Date de publication et mention de la délivrance du brevet: **02.11.1994**
(21) Numéro de dépôt: 91916358.4
(22) Date de dépôt: 06.08.1991
(51) Int. Cl.: G01J 5/08, G01J 5/10

(54) **DISPOSITIF DE MESURE A DISTANCE DE TEMPERATURE ET/OU DE DIFFERENCES DE TEMPERATURE**
VORRICHTUNG ZUR FERNMESSUNG DER TEMPERATUR UND/ODER VON TEMPERATURDIFFERENZEN
REMOTE TEMPERATURE AND/OR TEMPERATURE DIFFERENCE MEASURING DEVICE

(30) Priorité: 06.08.1990 FR 9010029
(43) Date de publication de la demande: 26.05.1993
(73) Titulaire: ORTOMEDIC, 38700 Corenc (FR)
(72) Inventeur: BARRAL, Jean-Pierre, F-38180 Seyssins (FR); MILLION, Bernard, F-38210 Saint-Quentin / Isère (FR); COLOMB, François, F-38000 Grenoble (FR)
(74) Mandataire: Casalonga, Axel
(86) Numéro de dépôt international: FR9100648
(87) Numéro de publication internationale: WO9202792

(56) Documents cités:
- EP-A- 0 311 148
- DE-A- 3 213 955
- DE-C- 3 710 486
- US-A- 3 017 513
- US-A- 4 315 150
- US-A- 4 636 093
- US-A- 4 743 122
- Patent Abstracts of Japan, vol. 5, no. 60 (P-58)(732), 23 April 1981

## Description

La présente invention concerne un dispositif de mesure de température et/ou de différences de température.

Pour effectuer de telles mesures, il est connu d'utiliser des capteurs de flux thermique qui captent le rayonnement infrarouge émis par une zone de la surface d'un corps, afin d'en déduire la température de la zone et/ou des différences de température.

US-A-4 636 093 divulgue un dispositif de mesure de température ayant un bouton pour provoquer la mémorisation de la température et l'heure pour plusieurs mesures.

DE-A-3 213 955 divulgue l'utilisation des moyens de repérage dans un dispositif de mesure de température.

Ces dispositifs connus sont cependant peu performants lorsqu'il s'agit de mesurer des différences de température très faibles et ils ne sont pas faciles à utiliser.

La présente invention a notamment pour but de remédier à ces inconvénients et propose un dispositif de mesure à distance de température et/ou de différences de température, qui comprend un circuit de mesure comprenant un capteur du flux thermique émis par une zone de la surface d'un corps et un bottier portant ce circuit de mesure.

Le dispositif de mesure à distance de température et/ou de différences de température comprend, selon la présente invention, un circuit de mesure comprenant un capteur du flux thermique émis par une zone de la surface d'un corps et un boîtier portatif portant le capteur précité ainsi que des moyens pour repérer la zone explorée.

Selon un objet de l'invention, le circuit de mesure comprend un circuit de mémoire relié au capteur thermique, un organe d'introduction de mémorisation tel qu'un bouton poussoir pour provoquer, à tout instant choisi, la mémorisation dans ce circuit de mémoire du signal provenant du capteur thermique précité, qui constitue alors un signal de référence, un comparateur dont l'une des entrées reçoit les signaux de sortie du capteur thermique et dont l'autre entrée est reliée audit circuit de mémoire fournissant un signal de référence, ce comparateur fournissant à sa sortie un signal correspondant à la différence entre ledit signal de référence et le signal provenant du capteur thermique, ainsi que des moyens de signalisation reliés à la sortie du comparateur et fournissant un signal correspondant à la différence précitée.

Selon l'invention, lesdits moyens de repérage comprennent de préférence des moyens permettant de placer ledit bottier dans une position déterminée par rapport à la surface du corps et peuvent en outre être réglables.

Dans une variante préférée, lesdits moyens de repérage comprennent au moins deux émetteurs de lumière dont les faisceaux lumineux produisent sur la surface du corps des taches lumineuses qui, uniquement lorsque le bottier est dans la position déterminée précitée, sont dans des positions déterminées l'une par rapport à l'autre.

Selon l'invention, les émetteurs de lumière peuvent avantageusement être disposés de part et d'autre du volume de visée ou exploré par le capteur thermique et émettent des faisceaux lumineux inclinés par rapport à l'axe de ce volume.

Selon l'invention, lesdits émetteurs lumineux sont de préférence réglables et reliés en rotation de manière à faire varier l'angle de leur axe par rapport à l'axe du volume exploré ou de visée.

Selon l'invention, au moins l'une des taches précitée est de préférence en coïncidence avec la surface dudit corps explorée par le capteur thermique.

Le dispositif selon l'invention peut en outre comprendre des moyens tels que le volume exploré ou de visée est un cylindre.

Dans une exécution préférée, ledit boîtier présente une ouverture en arrière de laquelle est placé un moyen réfléchissant, le capteur thermique étant placé devant ce moyen réfléchissant, ce moyen réfléchissant étant tel que le volume exploré ou de visée est cylindrique.

Ledit bottier peut également comprendre une poignée latérale de préhension à la base de laquelle est associé le bouton poussoir précité.

La présente invention sera mieux comprise à l'étude d'un dispositif de mesure à distance de température et/ou de différences de température décrit à titre d'exemple non limitatif et illustré par le dessin sur lequel :
- la figure 1 représente une coupe en élévation d'un dispositif de mesure de température selon la présente invention ;
- la figure 2 montre une vue extérieure du dispositif de mesure de température représenté sur la figure 1 ;
- la figure 3 représente une vue du côté gauche du dispositif de mesure de température représenté sur la figure 1 ;
- la figure 4 représente une vue correspondant à la figure 3, du dispositif de mesure de température, dans une autre position de réglage ;
- la figure 5 représente le synoptique du dispositif de mesure de température précité.

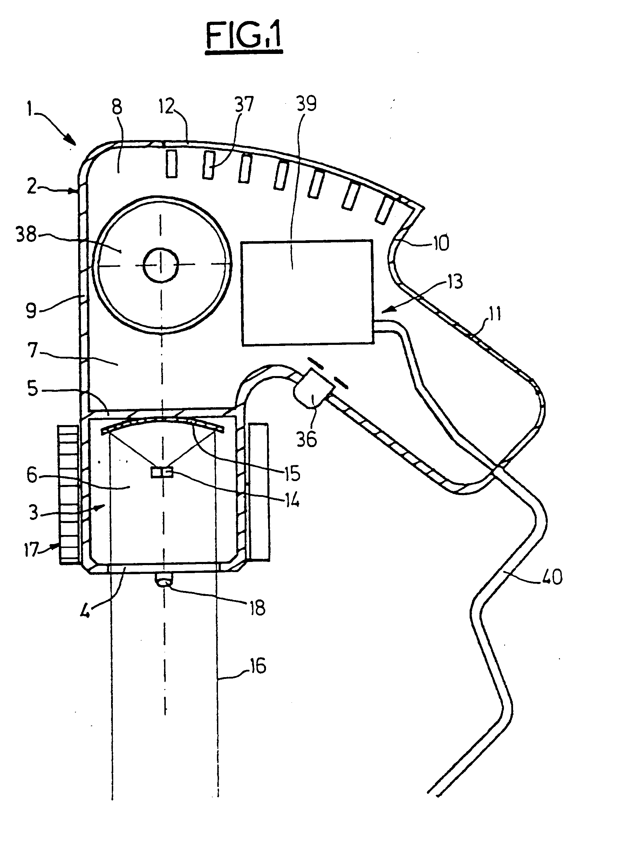

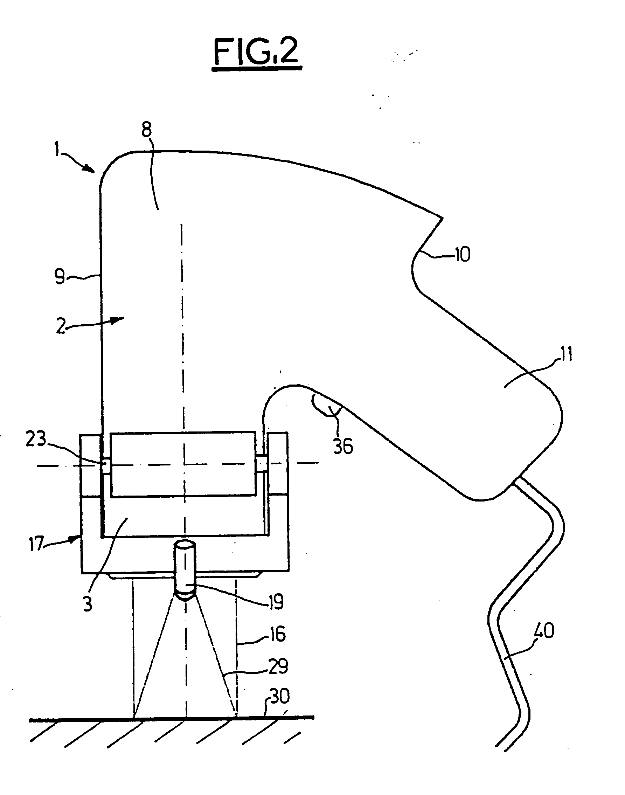

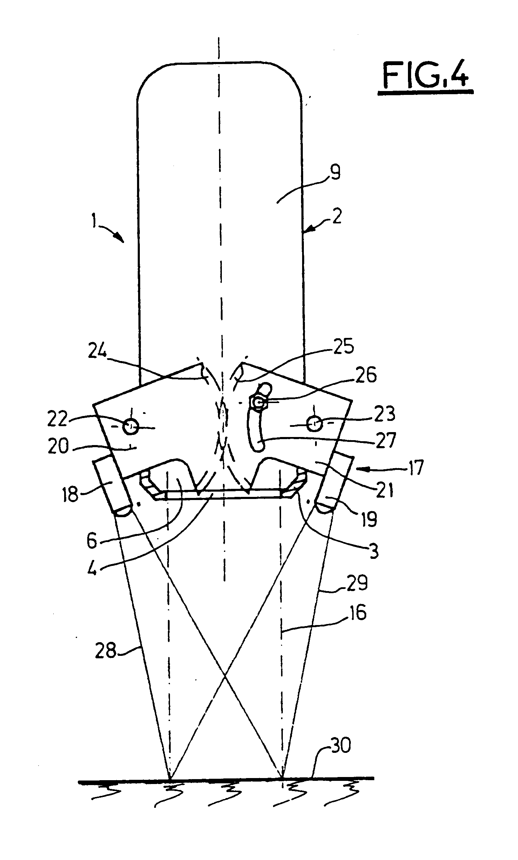

En se reportant aux figures 1 à 4, on voit que le dispositif de mesure à distance représenté, repéré d'une manière générale par la référence 1, comprend un boîtier portatif 2 par exemple en matière plastique qui présente une partie 3 cylindrique ou de section carrée dont l'une des extrémités présente une ouverture 4 et qui présente, à distance de cette ouverture, une paroi transversale 5 délimitant une chambre frontale 6.

Du côté de la paroi 5, le boîtier 2 présente en outre une chambre 7 qui présente dans un sens deux parois parallèles 8 et dans son autre sens une paroi 9 et une paroi inclinée 10 au travers de laquelle la chambre 7 se prolonge à l'intérieur d'une poignée 11.

Les parois 8 et la paroi 9 prolongent la partie 3. La poignée 11 est inclinée sensiblement à 45° par rapport à l'axe de la partie 3 et du côté de cette dernière et s'étend perpendiculairement à la paroi 10. A l'opposé de la paroi 5, la chambre 7 est fermée par une paroi 12 arquée dans le sens des parois 8.

Le dispositif de mesure de température 1 comprend un circuit de mesure repéré d'une manière générale par la référence 13, qui est porté par le boîtier 2.

Ce circuit de mesure 13 comprend un capteur de flux thermique 14 qui est monté dans la chambre 6 du bottier 2, à distance d'un miroir parabolique 15 fixé contre la paroi 5. Le capteur de flux thermique 14 est fixé selon l'axe de la chambre 6 par exemple par des pattes radiales non représentées. Le miroir réfléchissant 15 est tel que la face du capteur 14 tournée vers le miroir 15 reçoive, par convergence, le flux thermique vu, dans un cylindre de visée 16, au travers de l'ouverture 4 et autour du capteur 14.

Le dispositif de mesure de température 1 comprend en outre des moyens de repérage, repérés d'une manière générale par la référence 17 servant au positionnement du boîtier 2.

Ces moyens de repérage 17 comprennent deux émetteurs lumineux constitués par des diodes électroluminescentes 18 et 19 qui sont placées de part et d'autre de la partie cylindrique 9 du bottier 2 et qui sont portées par deux supports en U 20 et 21 articulés horizontalement sur le bottier 2 par des axes parallèles 22 et 23 qui sont perpendiculaires à l'axe de la partie cylindrique 3 du bottier 2. Ces deux supports 20 et 21 sont reliés en rotation par des portions de couronne dentée 24 et 25 et peuvent être immobilisés en rotation grâce à une vis 26 qui traverse un trou oblong arqué 27 ménagé dans l'une des aîles du support 21.

Ainsi, les diodes électroluminescentes 18 et 19 émettent des faisceaux lumineux 28 et 29 coniques dont les axes coupent en un même point l'axe du miroir parabolique 15.

Dans l'exemple décrit, lorsque le dispositif de mesure 1 est convenablement placé par rapport à une surface 30, c'est-à-dire lorsque l'axe de sa partie cylindrique 3 qui est confondu avec l'axe du miroir parabolique 15 qui correspond à l'axe du cylindre de visée 16 est placé perpendiculairement à la bonne distance de la surface 30, les deux traces lumineuses des faisceaux lumineux 28 et 29 sur la surface 30 doivent être sensiblement confondus, ces deux traces superposées recouvrant et en coincidence avec la zone de la surface 30 vue par le capteur 14 au travers du cylindre de visée 16.

Si le dispositif de mesure 1 n'est pas à la bonne distance ou est incliné par rapport à la surface 30, les traces ne sont pas dans la position souhaitée l'une par rapport à l'autre.

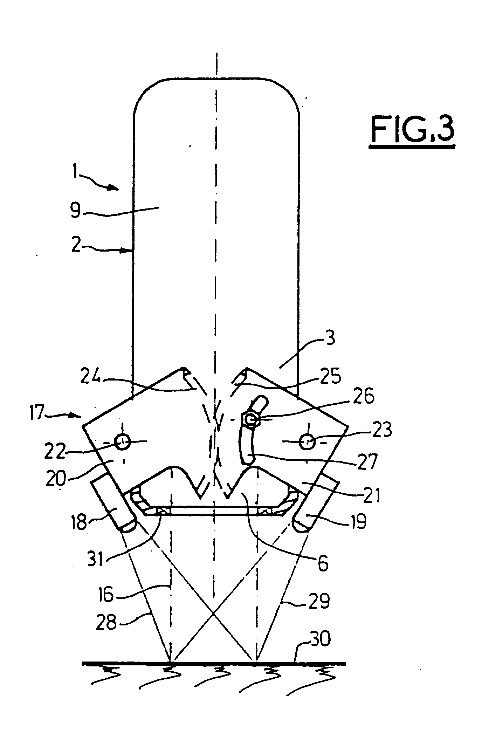

Comme le montre la figure 3, on peut faire varier le diamètre du cylindre de visée 16 en plaçant dans l'ouverture 4 de la chambre 6 une rondelle de réduction de diamètre 31 qui pourrait être remplacée par un diaphragme réglable.

Pour adapter éventuellement les moyens de repérage 17 à ce nouveau volume de visée, il suffit de modifier le réglage angulaire des supports 21 pour modifier l'angle que font les faisceaux 28 et 29 émis par les diodes électroluminescentes 18 et 19.

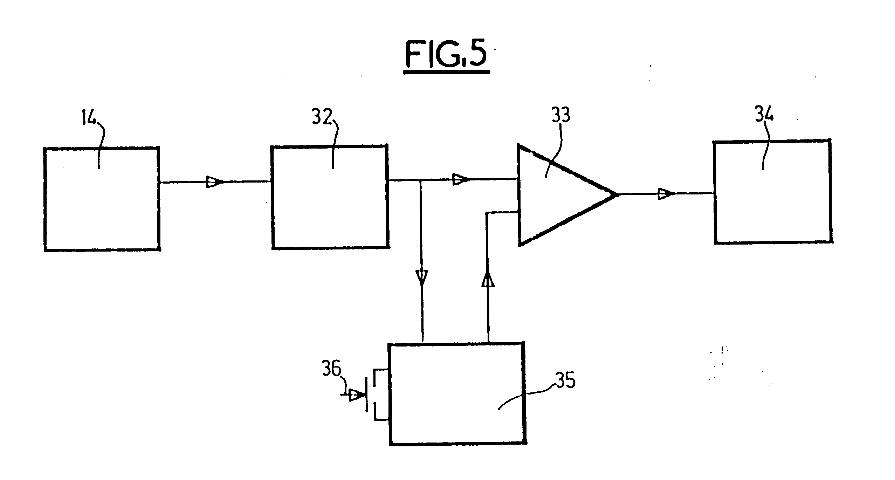

En se reportant maintenant à la figure 5, on voit que le circuit de mesure 13 comprend un amplificateur 32 qui reçoit les signaux fournis par le capteur thermique 14, un comparateur 33 dont l'une des entrées est reliée à la sortie de l'amplificateur 32 et dont la sortie est reliée à un moyen de signalisation 34.

Le circuit de mesure 13 comprend également un circuit mémoire 35 dont l'entrée est reliée à la sortie de l'amplificateur 32 et dont la sortie est reliée à l'autre entrée du comparateur 33. Ce circuit mémoire 35 sert à mémoriser à un instant donné le signal de sortie de l'amplificateur 32, cette opération étant effectuée grâce à un organe d'introduction d'ordre de mémorisation constitué dans l'exemple par un bouton poussoir 36 prévu à la base de la poignée 11, du côté du boîtier 2.

Dans l'exemple représenté sur la figure 1, les moyens de signalisation 34 sont constitués d'une part par une série de diodes lumineuses 37 placés sur la paroi 12 du boîtier 2 et un avertisseur sonore 38 placé dans la chambre 7 de ce boîtier.

L'amplificateur 32, le comparateur 33 et le circuit mémoire 35, ainsi que les composants annexes non représentés, sont par exemple portés par un circuit imprimé 39 monté dans la chambre 7 du boîtier 2 et alimenté par un cordon électrique 40 traversant l'extrémité de la poignée 11.

Pour utiliser le dispositif de mesure 1 décrit ci-dessus, on peut procéder de la manière suivante.

Tout d'abord on règle le diamètre de l'ouverture 4 au diamètre souhaité pour fixer un diamètre particulier au cylindre de visée 16. On règle l'inclinaison des diodes électroluminescentes 18 et 19, déterminant ainsi une distance de mesure particulière par rapport à la surface à explorer 30.

On prend le dispositif de mesure 1 dans la main par la poignée 11.

On place le dispositif de mesure 1 à la bonne distance et à la bonne position angulaire par rapport à la surface 30, cette position étant atteinte, dans l'exemple, lorsque les deux taches lumineuses obtenues par les faisceaux lumineux des diodes électroluminescentes 18 et 19 sont confondues et sensiblement circulaire.

On exerce une pression sur l'interrupteur 36 de manière à provoquer la mémorisation dans le circuit mémoire 35 du signal de sortie de l'amplificateur 32 correspondant à la mesure du flux thermique émis par la zone correspondante de la surface 30 en direction du capteur thermique 14.

On déplace le dispositif de mesure 1 de manière à l'amener, comme précédemment, dans la bonne position par rapport à une autre zone de la surface 30.

Le comparateur 33 compare alors le signal de sortie de l'amplificateur 32, qui correspond au flux thermique émis par cette autre zone en direction du capteur thermique 14, avec le signal mémorisé dans le circuit mémoire 35.

Le résultat de cette différence est transmis aux moyens de signalisation 34, le haut-parleur 38 produisant un niveau et/ou une modulation sonore déterminé correspondant et un nombre de diodes 37 déterminé correspondant étant allumées.

L'opérateur peut alors savoir si les deux zones comparées sont à la même température ou sont à des températures différentes et peut qualifier cette différence.

Naturellement, si le signal mémorisé dans le circuit mémoire 35 correspond à une température particulière connue, l'opérateur peut non seulement détecter des différences de température entre plusieurs zones mais également la température de chacune des zones, fournies par exemple par les diodes lumineuses 37.

L'opérateur peut, à tout instant qu'il choisit, modifier le signal de référence mémorisé dans le circuit de mémoire 35. Il suffit pour celà qu'il actionne le bouton poussoir 36.

Grâce au fait que le volume de visée ou d'exploration 16 est cylindrique et grâce aux moyens de repérage optiques 17, le dispositif de mesure 1 permet de qualifier des différences de température très petites, au moins jusqu'au dixième de degré, notamment pour des distances comprises entre 0,10 m et 1 m, le diamètre du cylindre de visée pouvant être compris entre 0,015 m et 0,04 m.

Le dispositif de mesure décrit ci-dessus peut avantageusement être utilisé pour mesurer des différences de température entre différentes zones à la surface d'un corps humain ou animal, afin de déterminer ou de confirmer un diagnostic médical. En effet, sa structure est conçue de telle sorte qu'il soit très maniable et qu'il permette de mesurer des différences de température en prenant une zone de référence qu'il peut changer quand il le souhaite, notamment afin d'effectuer des comparaisons de température de zones associées d'un point de vue médical.

La présente invention ne se limite pas à l'exemple ci-dessus décrit. En particulier, les diodes lumineuses de repérage pourraient produire des traces différentes et dans des positions de réglage différentes sur la surface à explorer et pourraient être remplacées par d'autres moyens de repérage notamment optiques, en particulier par un émetteur placé juste devant le capteur et émettant un rayon lumineux selon l'axe du cylindre de visée en direction de la surface à explorer. Le circuit de mesure du flux thermique pourait être différent notamment en ce qui concerne ses dispositions dans le bottier portatif et ses moyens de signalisation qui pourraient comprendre par exemple des moyens d'impression graphique éventuellement extérieurs au bottier ou d'autres moyens. Le bouton poussoir ou tout organe d'introduction d'ordre pourrait être extérieur au boîtier.

## Revendications

1. Dispositif de mesure à distance de température et/ou de différences de température comprenant un circuit de mesure (13) comprenant un capteur du flux thermique (14) émis par une zone de la surface (30) d'un corps et un boîtier portatif (2) portant le capteur précité ainsi que des moyens (17) pour repérer la zone explorée, caractérisé par le fait que le circuit de mesure (13) comprend un circuit de mémoire (35) relié au capteur thermique, un organe d'introduction de mémorisation tel qu'un bouton poussoir (36) pour provoquer, à tout instant choisi, la mémorisation dans ce circuit de mémoire du signal provenant du capteur thermique précité, qui constitue alors un signal de référence, un comparateur (33) dont l'une des entrées reçoit les signaux de sortie du capteur thermique (14) et dont l'autre entrée est reliée audit circuit de mémoire (35) fournissant un signal de référence, ce comparateur fournissant à sa sortie un signal correspondant à la différence entre ledit signal de référence et le signal provenant du capteur thermique, ainsi que des moyens de signalisation (34) reliés à la sortie du comparateur et fournissant un signal correspondant à la différence précitée.

2. Dispositif selon la revendication 1, caractérisé par le fait que lesdits moyens de repérage (17) comprennent des moyens permettant de placer ledit bottier dans une position déterminée par rapport à la surface du corps.

3. Dispositif selon l'une des revendications précédentes, caractérisé par le fait que lesdits moyens de repérage (17) sont réglables.

4. Dispositif selon l'une quelconque des revendications précédentes, caractérisé par le fait que lesdits moyens de repérage (17) comprennent au moins deux émetteurs de lumière (18, 19) dont les faisceaux lumineux produisent sur la surface du corps des taches lumineuses qui, uniquement lorsque le bottier (2) est dans la position déterminée précitée, sont dans des positions déterminées l'une par rapport à l'autre.

5. Dispositif selon la revendication 4, caractérisé par le fait que les émetteurs de lumière (18, 19) sont disposés de part et d'autre du volume de visée ou exploré par le capteur thermique (14) et émettent des faisceaux lumineux inclinés par rapport à l'axe de ce volume.

6. Dispositif selon la revendication 5, caractérisé par le fait que lesdits émetteurs lumineux (18, 19) sont réglables et reliés en rotation de manière à faire varier l'angle de leur axe par rapport à l'axe du volume exploré ou de visée.

7. Dispositif selon l'une quelconque des revendications 4 à 6 caractérisé par le fait qu'au moins l'une des taches précitée est en coïncidence avec la surface dudit corps explorée par le capteur thermique.

8. Dispositif selon l'une quelconque des revendications précédentes, caractérisé par le fait qu'il comprend des moyens (15) tels que le volume exploré ou de visée est un cylindre (16).

9. Dispositif selon la revendication 8, caractérisé par le fait que ledit boîtier (2) présente une ouverture (4) en arrière de laquelle est placé un moyen réfléchissant (15), le capteur thermique (14) étant placé devant ce moyen réfléchissant (15), ce moyen réfléchissant étant tel que le volume exploré ou de visée est cylindrique.

10. Dispositif selon l'une quelconque des revendications précédentes, caractérisé par le fait que ledit boîtier (2) comprend une poignée latérale (11) de préhension à la base de laquelle est associé le bouton poussoir précité (36).

## Patentansprüche

1. Fernmeßvorrichtung für Temperatur und/oder Temperaturdifferenzen, umfassend einen Meßkreis (13), umfassend einen Aufnehmer für den von einem Bereich der Oberfläche (30) eines Körpers ausgestrahlten Wärmefluß und ein tragbares Gehäuse (2), das den vorgenannten Aufnehmer trägt, sowie Mittel (17) zur Kennzeichnung des untersuchten Bereichs, dadurch **gekennzeichnet**, daß der Meßkreis (13) einen mit dem Wärmeaufnehmer verbundenen Speicherkreis (35), ein Organ zur Speicherungseinleitung wie einen Druckknopf (36), um in jedem gewählten Augenblick die Speicherung des von dem vorgenannten Wärmeaufnehmer herkommenden Signals, das nun ein Referenzsignal bildet, in den Speicherkreis herbeizuführen, einen Komparator (33), dessen einer Eingang die Ausgangssignale des Wärmeaufnehmers (14) empfängt und dessen anderer Eingang mit dem Speicherkreis (35) verbunden ist, der ein Referenzsignal liefert, wobei der Komparator an seinem Ausgang ein Signal entsprechend der Differenz zwischen dem Referenzsignal und dem von dem Wärmeaufnehmer herkommenden Signal liefert, sowie Anzeigemittel (34) umfaßt, die mit dem Ausgang des Komparators verbunden sind und ein Signal entsprechend der vorgenannten Differenz liefern.

2. Vorrichtung nach Anspruch 1, dadurch **gekennzeichnet**, daß die Kennzeichnungsmittel (17) Mittel umfassen, die es gestatten, das Gehäuse in einer vorbestimmten Position in bezug auf die Oberfläche des Körpers anzuordnen.

3. Vorrichtung nach einem der vorhergehenden Ansprüche, dadurch **gekennzeichnet**, daß die Kennzeichnungsmittel (17) regulierbar sind.

4. Vorrichtung nach einem beliebigen der vorhergehenden Ansprüche, dadurch **gekennzeichnet**, daß die Kennzeichnungsmittel (17) wenigstens zwei Lichtsender (18, 19) umfassen, deren Lichtbündel auf der Oberfläche des Körpers Lichtflecken erzeugen, die sich einzig, wenn sich das Gehäuse (2) in der vorgenannten bestimmten Position befindet, in bestimmten Positionen in bezug aufeinander befinden.

5. Vorrichtung nach Anspruch 4, dadurch **gekennzeichnet**, daß sich die Lichtsender (18, 19) auf beiden Seiten des Beobachtungs- oder durch den Wärmeaufnehmer (14) untersuchten Volumens befinden und in bezug auf die Achse des Volumens geneigte Lichtbündel aussenden.

6. Vorrichtung nach Anspruch 5, dadurch **gekennzeichnet**, daß die Lichtsender (18, 19) regulierbar sind und in Rotation derart verbunden sind, daß der Winkel ihrer Achse in bezug auf die Achse des untersuchten oder Beobachtungsvolumens geändert wird.

7. Vorrichtung nach einem beliebigen der Ansprüche 4 bis 6, dadurch **gekennzeichnet**, daß wenigstens einer der vorgenannten Flecken in Koinzidenz mit der Oberfläche des durch den Wärmeaufnehmer untersuchten Körpers ist.

8. Vorrichtung nach einem beliebigen der vorhergehenden Ansprüche, dadurch **gekennzeichnet**, daß sie Mittel (15) umfaßt, so wie das untersuchte oder Beobachtungsvolumen ein Zylinder (16) ist.

9. Vorrichtung nach Anspruch 8, dadurch **gekennzeichnet**, daß das Gehäuse (2) eine Öffnung (4) aufweist, hinter der ein reflektierendes Mittel (15) angeordnet ist, wobei der Wärmeaufnehmer vor dem reflektierenden Mittel (15) angeordnet ist, wobei das reflektierende Mittel so ist, wie das untersuchte oder Beobachtungsvolumen zylindrisch ist.

10. Vorrichtung nach einem beliebigen der vorhergehenden Ansprüche, dadurch **gekennzeichnet**, daß das Gehäuse (2) eine seitliche Greifhandhabe (11) umfaßt, mit deren Basis der vorgenannte Druckknopf (36) verbunden ist.

## Claims

1. Remote temperature and/or temperature difference measuring device comprising a measuring circuit (13) comprising a sensor (14) of the heat flux emitted by an area of the surface (30) of a body and a portable housing (2) carrying the aforesaid sensor as well as means (17) for marking the explored area, characterized in that the measuring circuit (13) comprises a memory circuit (35) connected to the heat sensor, a storage input unit such as a push button (36) for effecting, at any chosen instant, the storage in this memory circuit of the signal coming from the aforesaid heat sensor, which then constitutes a reference signal, a comparator (33), one of the inputs of which receives the output signals from the heat sensor (14) and the other input of which is connected to the said memory circuit (35) providing a reference signal, this comparator providing at its output a signal corresponding to the difference between the said reference signal and the signal coming from the heat sensor, as well as signaling means (34) connected to the output of the comparator and providing a signal corresponding to the aforesaid difference.

2. Device according to Claim 1, characterized in that the said marker means (17) comprise means enabling the said housing to be stationed in a specified position with respect to the surface of the body.

3. Device according to any one of the preceding claims, characterized in that the said marker means (17) are adjustable.

4. Device according to any one of the preceding claims, characterized in that the said marker means (17) comprise at least two light emitters (18, 19) whose light beams produce on the surface of the body light spots which, only when the housing (2) is in the aforesaid specified position, are in specified positions with respect to one another.

5. Device according to Claim 4, characterized in that the light emitters (18, 19) are arranged on either side of the volume sighted or explored by the heat sensor (14) and emitting light beams inclined with respect to the axis of this volume.

6. Device according to Claim 5, characterized in that the said light emitters (18, 19) are adjustable and are rotationally connected so as to vary the angle of their axis with respect to the axis of the explored or sighted volume.

7. Device according to any one of Claims 4 to 6, characterized in that at least one of the aforesaid spots coincides with the surface of the said body explored by the heat sensor.

8. Device according to any one of the preceding claims, characterized in that it comprises means (15) such that the explored or sighted volume is a cylinder (16).

9. Device according to Claim 8, characterized in that the said housing (2) has an aperture (4) behind which is stationed a reflecting means (15), the heat sensor (14) being stationed in front of this reflecting means (15), this reflecting means being such that the explored or sighted volume is cylindrical.

10. Device according to any one of the preceding claims, characterized in that the said housing (2) comprises a lateral grip (11) for grasping, to the base of which is connected the aforesaid push button (36).
